# EUROPEAN PATENT SPECIFICATION

(11) **EP 4 040 897 B1**
(45) Date of publication and mention of the grant of the patent: **03.12.2025**
(21) Application number: 19948024.5
(22) Date of filing: 03.10.2019
(51) Int. Cl.: H04W 72/02, H04L 1/08, H04L 1/1867, H04W 72/1268, H04W 72/56

(54) **TERMINAL AND COMMUNICATION METHOD**
ENDGERÄT UND KOMMUNIKATIONSVERFAHREN
TERMINAL ET PROCÉDÉ DE COMMUNICATION

(43) Date of publication of application: 10.08.2022
(73) Proprietor: NTT DOCOMO, INC., Chiyoda-Ku Tokyo 100-6150 (JP)
(72) Inventor: TAKAHASHI, Hideaki, Tokyo 100-6150 (JP); MIN, Tianyang, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2019/039220
(87) International publication number: WO 2021/064972

(56) References cited:
- WO-A1-2020/094124
- HUAWEI ET AL: "Discussion on ensuring K repetitions for configured grant PUSCH transmission", vol. RAN WG1, no. Reno, USA; 20190513 - 20190517, 13 May 2019 (2019-05-13), XP051728063, Retrieved from the Internet <URL:http://www.3gpp.org/ftp/Meetings%5F3GPP%5FSYNC/RAN1/Docs/R1%2D1906612%2Ezip> [retrieved on 20190513]
- NTT DOCOMO ET AL: "UL intra-UE transmission prioritization/multiplexing", vol. RAN WG1, no. Reno, USA; 20190513 - 20190517, 13 May 2019 (2019-05-13), XP051727672, Retrieved from the Internet <URL:http://www.3gpp.org/ftp/Meetings%5F3GPP%5FSYNC/RAN1/Docs/R1%2D1906218%2Ezip> [retrieved on 20190513]
- SONY: "Considerations on UL Intra-UE Tx Multiplexing", vol. RAN WG1, no. Athens, Greece; 20190225 - 20190301, 16 February 2019 (2019-02-16), XP051599877, Retrieved from the Internet <URL:http://www.3gpp.org/ftp/tsg%5Fran/WG1%5FRL1/TSGR1%5F96/Docs/R1%2D1902182%2Ezip> [retrieved on 20190216]
- SONY: "Considerations on UL Intra-UE Tx Multiplexing", 3GPP TSG RAN WG1 #96 R1- 1902182, vol. RAN WG1, 16 February 2019 (2019-02-16), XP051599877
- NTT DOCOMO; INC: "Recovery for deprioritized data transmission", 3GPP TSG RAN WG2 #107BIS R2-1913746, vol. RAN WG2, 4 October 2019 (2019-10-04), XP051791738

## Description

### Technical Field

The present invention relates to a terminal and a communication method.

### Background Art

Non-Patent Literature 1 discloses a communication method for a case where a high-priority uplink signal and a low-priority uplink signal come into conflict with each other in transmitting the high-priority uplink signal and the low-priority uplink signal by using DG and CG. Note that DG is an abbreviation for a Dynamic Grant. CG is an abbreviation for a Configured Grant. "Conflict" may also be referred to as "collision", "overlap", or the like.

WO 2020/094124 A1 (FG INNOVATION CO LTD [CN]) is an earlier patent document but published after the filing date of the present application, dealing with an improved and efficient mechanism for UE to handle multiple active CG configurations, for example, for uplink transmission. There are more overlapping cases if multiple CG configurations may be configured and activated in the same serving cell simultaneously, e.g., case 3: overlapping between PUSCH durations from multiple CG configurations, wherein at least one PUSCH duration for an CG configuration may be used for an initial transmission while at least one PUSCH duration for another CG configuration may be used for a repetition transmission. In case 3, if the CG timers that correspond to the HARQ IDs of all the overlapping PUSCH durations that may be used for initial transmissions are running, none of these PUSCH durations may be considered available for transmitting a new MAC PDU. As a result, the MAC entity may only select the PUSCH durations for repetition transmissions. About priority for CG configurations, the MAC entity may allow the use of a PUSCH duration for an initial transmission when PUSCH duration(s) for initial transmission(s) and PUSCH duration(s) for repetition transmission(s) overlap.

HUAWEI ET AL: "Discussion on ensuring K repetitions for configured grant PUSCH transmission", 3GPP DRAFT, is a discussion on ensuring K repetitions for configured grant PUSCH transmission where a sufficient number of repetitions for configured grant PUSCH transmission is ensured by allowing repetitions of a TB with Rel.15 flexible start to cross a period boundary.

NTT DOCOMO ET AL: "UL intra-UE transmission prioritization/multiplexing", 3GPP DRAFT, deals with UL intra-UE transmission prioritization/multiplexing where an ongoing UL configured grant transmission including repetitions should not be interrupted by another UL configured grant configuration having new data arriving when multiple configured grant configurations are used to reduce latency and ensure reliability.

SONY: "Considerations on UL Intra-UE Tx Multiplexing", 3GPP DRAFT, relates to a discussion on "Intra-UE UL Prioritization: Configured Grant vs Configured Grant". In particular, a proposal is raised that if two PUSCH repetitions using different configured grants collide, the later PUSCH has priority over the earlier PUSCH, and the UE cancels the remaining repetition of the earlier PUSCH and transmits the later PUSCH.

### Citation List

### Non-Patent Literature

NPL 1
3GPP TSG-RAN WG2 Meeting #107 "DRAFT Session Notes NRUP TEI16UP IAB NR-U IIOT eURLLC", Prague, Czech Republic, 26th - 30th August 2019

### Summary of Invention

### Technical Problem

NPL 1, however, does not disclose the conflict in repeatedly transmitting the low-priority uplink signal. Thus, the uplink signals may not be appropriately transmitted when a terminal repeatedly transmits the low-priority uplink signal.

One object of the present disclosure is to appropriately transmit uplink signals.

### Solution to Problem

The present invention is defined by the independent claims. Preferred embodiments are defined by the dependent claims. Further aspects are provided for facilitating the understanding of the invention. A terminal according to one aspect of the present disclosure includes: a control section that determines, when a collision occurs between a first transmission section for a first uplink data signal in a first uplink data channel and one of a plurality of second transmission sections to repeatedly transmit a second uplink data signal in a second uplink data channel, whether to perform transmission or non-transmission of the second uplink data signal in one or more of the second transmission sections where the collision does not occur, the second uplink data signal being a signal whose priority is lower than that of the first uplink data signal; and a transmission section that transmits the first uplink data signal and the second uplink data signal when the transmission is determined to be performed.

A communication method according to one aspect of the present disclosure includes: determining, by a terminal, when a collision occurs between a first transmission section for a first uplink data signal in a first uplink data channel and one of a plurality of second transmission sections to repeatedly transmit a second uplink data signal in a second uplink data channel, whether to perform transmission or non-transmission of the second uplink data signal in one or more of the second transmission sections where the collision does not occur, the second uplink data signal being a signal whose priority is lower than that of the first uplink data signal; and transmitting, by the terminal, the first uplink data signal and the second uplink data signal when the transmission is determined to be performed.

### Advantageous Effects of Invention

According to the present disclosure, it is possible to appropriately transmit uplink signals.

### Brief Description of Drawings

FIG. 1 is a diagram for explaining an exemplary uplink signal transmission in a terminal;
FIG. 2 illustrates an exemplary configuration of a radio communication system according to an embodiment;
FIG. 3 is a block diagram illustrating an exemplary configuration of the terminal;
FIG. 4 is a block diagram illustrating an exemplary configuration of a base station;
FIG. 5 is a diagram for explaining another exemplary uplink signal transmission in the terminal;
FIG. 6 is a diagram for explaining still another exemplary uplink signal transmission in the terminal;
FIG. 7 illustrates an exemplary hardware configuration of the terminal and the base station.

### Description of Embodiment

Hereinafter, embodiments of the invention will be described below with reference to the accompanying drawings.

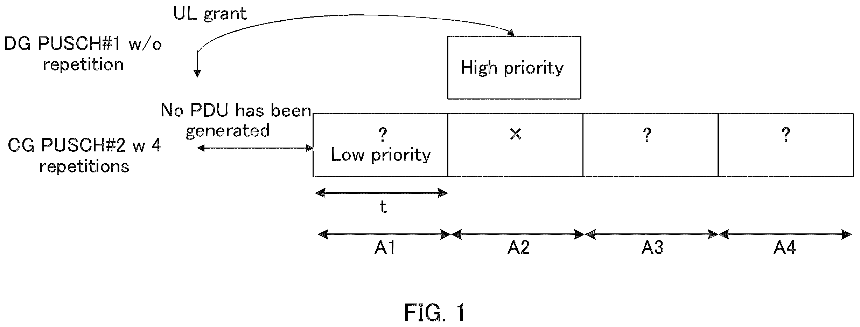

FIG. 1 is a diagram for explaining an exemplary uplink signal transmission in a terminal. In the following, DG PUSCH is an abbreviation for a Dynamic Grant Physical Uplink Shared CHannel. CG PUSCH is an abbreviation for a Configured Grant Physical Uplink Shared CHannel. MAC PDU is an abbreviation for a Media Access Control Protocol Data Unit. SR is an abbreviation for a Scheduling Request. PUCCH is an abbreviation for a Physical Uplink Control CHannel. UL-SCH is an abbreviation for an UpLink Shared CHannel. An "uplink signal" may be referred to as an "uplink data signal".

As illustrated in FIG. 1, the terminal transmits uplink signals using DG PUSCH #1 and CG PUSCH #2. One of DG PUSCH #1 and CG PUSCH #2 is used for transmission of a high-priority uplink signal and the other is used for transmission of a low-priority uplink signal. The priority of DG PUSCH #1 and CG PUSCH #2 may be fixedly or dynamically determined. In the example of FIG. 1, DG PUSCH #1 is configured to high priority and CG PUSCH #2 is configured to low priority. Note that "t" in FIG. 1 may be interpreted as time, at least one symbol, or at least one slot.

In a meeting of RAN2#107, it has been agreed that the terminal preferentially transmits the high-priority uplink signal to a base station when the high-priority uplink signal and the low-priority uplink signal collide with each other. It has been agreed that the terminal does not transmit the low-priority uplink signal (PDU) in, for example, the period indicated by double-headed arrow A2 in FIG. 1. This assumes that a MAC PDU recovery system in grant prioritization is reusable for a conflict between PUSCH and SR. For example, SR is triggered before generation of a MAC PDU assembly, and a PUCCH resource in transmitting SR and a UL-SCH resource of MAC PDU conflict with each other. In this case, the UL-SCH transmission is not prioritized and no MAC PDU is generated.

In the meeting of RAN2#107, however, no agreement has been made on a transmission method of repeatedly transmitting the low-priority uplink signals to the base station.

In FIG. 1, for example, when the terminal receives a UL grant from the base station, the terminal transmits the high-priority uplink signal to the base station using DG PUSCH#1. In addition, for example, when the terminal generates the low-priority uplink signal (when the low-priority uplink signal to be transmitted to the base station is generated), the terminal repeatedly transmits the low-priority uplink signal to the base station using CG PUSCH#2. The example of FIG. 1 assumes the case of repeatedly transmitting the uplink signal to the base station four times using time "t" as a single unit. In the meeting of RAN2#107, no agreement has been made on a transmission method for the low-priority signal in the periods indicated by arrows A1, A3, and A4 although the terminal does not transmit the low-priority uplink signal in the period indicated by arrow A2 in FIG. 1.

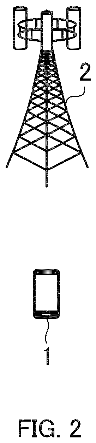

FIG. 2 illustrates an exemplary configuration of a radio communication system according to an embodiment. As illustrated in FIG. 2, the radio communication system includes terminal 1 and base station 2.

Terminal 1 transmits uplink signals to base station 2 using two uplink channels. Terminal 1, for example, transmits an uplink signal using DG PUSCH. Terminal 1 repeatedly transmits an uplink signal certain times using CG PUSCH.

As described above, the priority of DG PUSCH and CG PUSCH may be fixedly or dynamically determined. Hereinafter, the priority of DG PUSCH is assumed to be higher than that of CG PUSCH.

Base station 2 notifies a UL grant to terminal 1. Terminal 1 transmits the uplink signal using DG PUSCH in accordance with the UL grant notified from base station 2. When the uplink signal to be transmitted to base station 2 is generated, terminal 1 transmits the uplink signal using CG PUSCH even without the notification of the UL grant from base station 2. Base station 2 receives the uplink signals transmitted from terminal 1.

Although only single terminal 1 is illustrated in FIG. 2, there may also be a plurality of terminals.

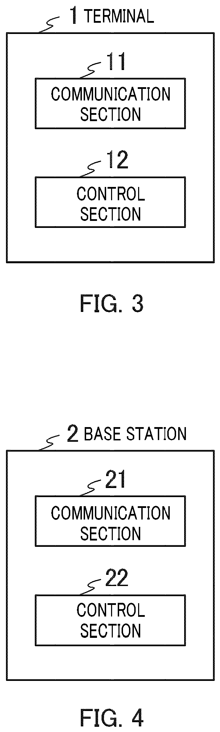

FIG. 3 is a block diagram illustrating an exemplary configuration of terminal 1. As illustrated in FIG. 3, terminal 1 includes communication section 11 and control section 12.

Communication section 11 communicates with base station 2. Communication section 11 transmits uplink signals to the base station using the first uplink channel and the second uplink channel. For example, communication section 11 transmits a high-priority uplink signal to base station 2 using DG PUSCH. Communication section 11 repeatedly transmits a low-priority uplink signal to base station 2 using CG PUSCH.

Control section 12 controls the entire operation of terminal 1. Control section 12, for example, controls communication section 11. Control section 12 determines not to transmit the low-priority uplink signal when the transmission timings of the high-priority uplink signal and the low-priority uplink signal overlap with each other. In other words, control section 12 does not transmit the low-priority uplink signal when the transmission timings of the high-priority uplink signal and the low-priority uplink signal overlap with each other.

FIG. 4 is a block diagram illustrating an exemplary configuration of base station 2. As illustrated in FIG. 4, base station 2 includes communication section 21 and control section 22.

Communication section 21 communicates with terminal 1. Communication section 21 receives the uplink signal to be transmitted using the first uplink channel and the uplink signal to be repeatedly transmitted using the second uplink channel.

Control section 22 schedules uplink communication of terminal 1, and transmits a UL grant to terminal 1. Control section 22 schedules the uplink communication of terminal 1 based on, for example, a UCI. Note that UCI is an abbreviation for an Uplink Control Information.

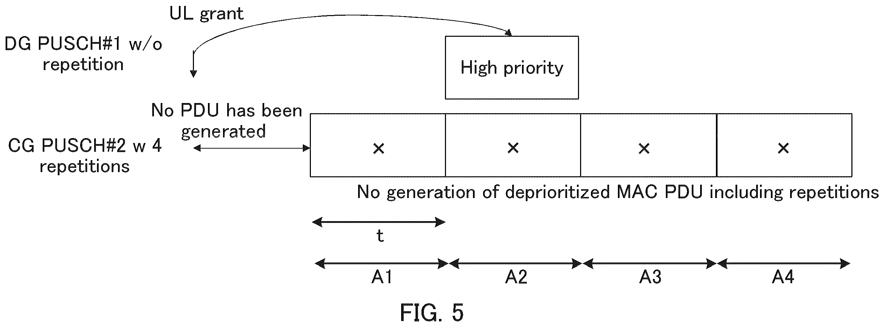

FIG. 5 is a diagram for explaining another exemplary uplink signal transmission in terminal 1. The agreement in the RAN2#107 meeting is applied to the low-priority PDU with and without repetition. In the RAN2#107, however, no specific agreement has been made on a transmission method of the low-priority uplink signal when the high-priority uplink signal and the low-priority uplink signal, which is repeatedly transmitted, collide with each other. FIG. 5 explains the transmission method when the high-priority uplink signal and the low-priority uplink signal, which is repeatedly transmitted, collide with each other in the case of repeatedly transmitting the low-priority uplink signal to the base station.

Terminal 1 transmits the high-priority uplink signal using DG PUSCH #1 after receiving a UL grant from base station 2.

Terminal 1 repeatedly transmits the low-priority uplink signal using CG PUSCH #2 after generating the uplink signal to be transmitted to base station 2. Terminal 1, for example, repeatedly transmits the low-priority uplink signal certain times (e.g., four times) in a certain time domain of CG PUSCH #2. The certain time domain may also be referred to as a repetitive transmission section, a certain number of symbols, a certain number of slots, a certain region of radio resources, or a certain region of time resources.

When the uplink signal to be repeatedly transmitted using a low-priority channel overlaps with the timing of the uplink signal to be transmitted using a high-priority channel, terminal 1 does not transmit the uplink signal to be repeatedly transmitted using the low-priority channel.

For example, when the uplink signal to be repeatedly transmitted using CG PUSCH #2 overlaps with the transmission timing of the uplink signal of DG PUSCH #1, terminal 1 does not generate the uplink signal to be repeatedly transmitted using CG PUSCH #2, and does not transmit the uplink signal to be repeatedly transmitted to base station 2.

To be more specific, the timing of transmitting the uplink signal using DG PUSCH #1 and the timing of the uplink signal (uplink signal at the second time) to transmit using CG PUSCH #2 overlap with each other at the time (symbol or slot) of double-headed arrow A2 in FIG. 5. In this case, terminal 1 does not generate the low-priority uplink signal to be transmitted to base station 2 and does not transmit to base station 2. In other words, although the uplink signals come into collision in the second transmission of the repetitive transmission of CG PUSCH #2, terminal 1 does not generate the low-priority uplink signal (PDU), and thus the other three non-collided repetitions of CG PUSCH #2 are dropped.

The process described above prevents the collision between the uplink signal to be transmitted using DG PUSCH #1 and the uplink signal to be transmitted using CG PUSCH #2.

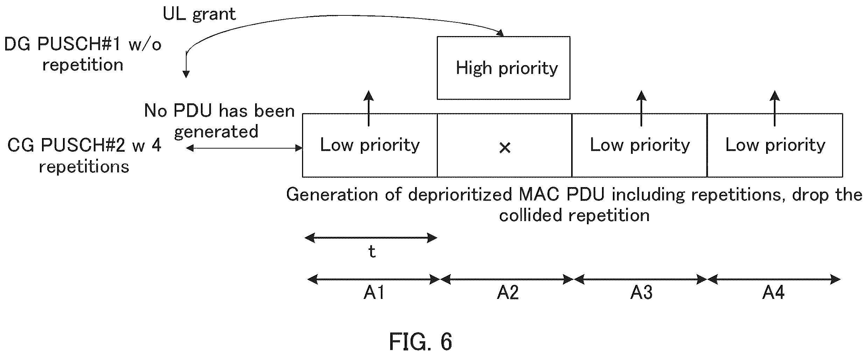

FIG. 6 is a diagram for explaining still another exemplary uplink signal transmission in terminal 1. This is applied only to a low-priority PDU without repetition according to the agreement in the RAN2#107 meeting. In other words, no agreement has been made in the RAN2#107 meeting on the case of repeatedly transmitting the low-priority uplink signal to the base station.

In FIG. 6, terminal 1 does not transmit the uplink signal whose transmission timing overlaps with the uplink signal to be transmitted using DG PUSCH #1, in the uplink signal repeatedly transmitted in a certain time domain of CG PUSCH #2. In other words, terminal 1 determines not to transmit the uplink signal of CG PUSCH #2 whose transmission timing overlaps with the uplink signal of DG PUSCH #1.

For example, in the uplink signal repeatedly transmitted in a certain time domain of CG PUSCH #2, the uplink signal in a period indicated by double-headed arrow A2 in FIG.6 overlaps with the transmission timing of the uplink signal of DG PUSCH #1. In this case, terminal 1 does not transmit the uplink signal of CG PUSCH #2 which is in the period indicated by double-headed arrow A2 in FIG.6 and whose transmission timing overlaps with the uplink signal of DG PUSCH #1. In other words, terminal 1 generates the low-priority uplink signal (PDU), and repeatedly transmits the non-collided uplink signal with the uplink signal of DG PUSCH #1, in the uplink signal to be repeatedly transmitted four times.

The process described above prevents the collision between the uplink signal to be transmitted using DG PUSCH #1 and the uplink signal to be transmitted using CG PUSCH #2.

In addition, this allows terminal 1 to restrict an additional overhead to reschedule the low-priority uplink signal. This further allows terminal 1 to transmit the other non-collided uplink signals to be repeatedly transmitted as scheduled.

Note that terminal 1, for example, does not have to transmit the uplink signal in all of the first time domain, the third time domain, and the fourth time domain. Terminal 1 may transmit the uplink signal in at least one of the first time domain, the third time domain, or the fourth time domain that are not collided with the high-priority uplink signal.

Additionally, the uplink signal to be repeatedly transmitted may be transmitted by DG PUSCH although it is described to be transmitted by CG PUSCH.

As described above, terminal 1 includes: control section 12 that determines, when a collision occurs between a first transmission section for a first uplink data signal in a first uplink data channel and one of a plurality of second transmission sections to repeatedly transmit a second uplink data signal whose priority is lower than that of the first uplink data signal in a second uplink data channel, whether to perform transmission or non-transmission of the second uplink data signal in second transmission sections where the collision does not occur; and; communication section 11 that transmits the first uplink data signal and the second uplink data signal when the transmission is determined to be performed. This processing enables terminal 1 to appropriately transmit the uplink signals.

Note that the first uplink data channel may, for example, be DG PUSCH. The second uplink data channel may, for example, be CG PUSCH. The first transmission section may, for example, be a section to transmit the high-priority uplink signal. The second transmission section may, for example, be a block (or a unit) to repeatedly transmit the uplink signal. The second transmission section may also, for example, be a section of "t" illustrated in FIG. 5.

The present disclosure has been described thus far.

### <Hardware Configuration and/or the like>

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

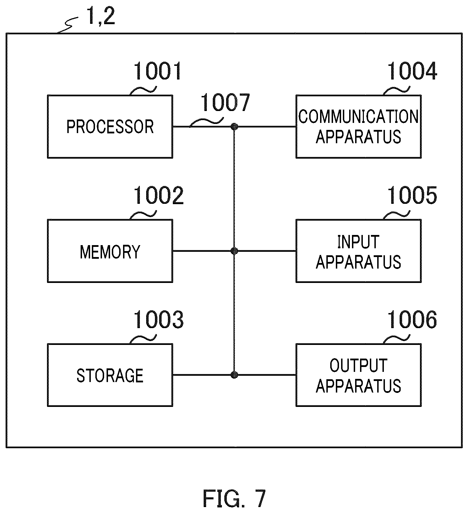

For example, the terminal, base station, and the like according to the embodiments of the present disclosure may function as a computer that executes processing of a radio communication method of the present disclosure. FIG. 7 illustrates an exemplary hardware configuration of terminal 1 and base station 2. Physically, terminal 1 and base station 2 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configuration of terminal 1 and base station 2 may include one apparatus or a plurality of apparatuses illustrated in the drawings or may not include part of the apparatuses.

The functions of terminal 1 and base station 2 are implemented using predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control sections 12 and 22 and the like as described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 12 of terminal 1 and control section 22 of base station 2 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, communication section 11 of terminal 1 and communication section 21 of base station 2 may be implemented using communication apparatus 1004. Communication sections 11 and 21 may be implemented using a transmission section and a reception section physically or logically separated from each other.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, terminal 1 and base station 2 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### <Notification and Signaling of Information>

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### <Applied System>

The aspects and embodiments described in the present specification may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and the like>

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by an upper node depending on the situation. Various operations performed for communication with a user equipment in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### <Direction of Input and Output>

The information or the like (see the item of "Information and Signals") can be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like of Aspects>

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the scope of the present
disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <"System" and "Network">

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### <Base Station>

The terms "Base Station (BS)," "wireless base station," "fixed station," "NodeB," "eNodeB (eNB)," "gNodeB (gNB)," "access point," "transmission point," "reception point, "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### <Mobile Station>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user equipment. For example, the aspects and the embodiments of the present disclosure may find application in a configuration that results from replacing communication between the base station and the user equipment with communication between multiple user equipments (such communication may, e.g., be referred to as device-to-device (D2D), vehicle-to-everything (V2X), or the like). In this case, the user equipment may be configured to have the functions that the base station described above has. The wordings "uplink" and "downlink" may be replaced with a corresponding wording for inter-equipment communication (for example, "side"). For example, an uplink channel, a downlink channel, and the like may be replaced with a side channel.

Similarly, the user equipment in the present disclosure may be replaced with the base station. In this case, the base station may be configured to have the functions that the user equipment described above has.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <Terms "first" and "second">

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <"Means">

The "means" in the configuration of each apparatus described above may be replaced with "section," "circuit," "device," or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain.

The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in wireless communication. For example, in an LTE system, the base station performs scheduling for allocating a radio resource (a frequency bandwidth, a transmit power, and the like that are used in each user equipment) on the basis of TTI to each user equipment. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Article>

In a case where articles, such as "a," "an," and "the" in English, for example, are added in the present disclosure by translation, nouns following these articles may have the same meaning as used in the plural.

### <"Different">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### Industrial Applicability

One aspect of the present disclosure is useful for radio communication systems.

### Reference Signs List

1 Terminal
2 Base station
11, 21 Communication section
12, 22 Control section
1001 Processor
1002 Memory
1003 Storage
1004 Communication apparatus
1005 Input apparatus
1006 Output apparatus

## Claims

1. A terminal (1), comprising:
a control section (12) configured to determine a priority of a first uplink signal and a priority of a second uplink signal; and
a transmission section (11) configured to transmit the first uplink signal and the second uplink signal, wherein
when a transmission timing of the second uplink signal overlaps with a transmission timing of the first uplink signal that is de-prioritized over the second uplink signal and is repeatedly transmitted, the control section (12) is configured to determine non-transmission of all of a plurality of the first uplink signals to be repeatedly transmitted,
wherein the control section (12) is configured to determine the priority of the first uplink signal transmitted by a configured grant and the priority of the second uplink signal transmitted by a dynamic grant.

2. A radio system, comprising:
a terminal (1) comprising:
a control section (12) configured to determine a priority of a first uplink signal and a priority of a second uplink signal; and
a transmission section (11) configured to transmit the first uplink signal and the second uplink signal, wherein,
when a transmission timing of the second uplink signal overlaps with a transmission timing of the first uplink signal that is de-prioritized over the second uplink signal and is repeatedly transmitted, the control section (12) is configured to determine non-transmission of all of a plurality of the first uplink signals to be repeatedly transmitted,
wherein the control section (12) is configured to determine the priority of the first uplink signal transmitted by a configured grant and the priority of the second uplink signal transmitted by a dynamic grant; and
a base station (2) comprising:
a reception section (21) configured to receive the second uplink signal when the transmission timing of the second uplink signal overlaps with the transmission timing of the first uplink signal and the non-transmission of all of the plurality of the first uplink signals to be repeatedly transmitted is determined by the terminal (1).

3. A communication method, comprising:
determining, by a terminal (1), a priority of a first uplink signal and a priority of a second uplink signal, and determining, by the terminal (1), the priority of the first uplink signal transmitted by a configured grant and the priority of the second uplink signal transmitted by a dynamic grant;
transmitting, by the terminal (1), the first uplink signal and the second uplink signal; and
when a transmission timing of the second uplink signal overlaps with a transmission timing of the first uplink signal that is de-prioritized over the second uplink signal and is repeatedly transmitted, determining, by the terminal (1), non-transmission of all of a plurality of the first uplink signals to be repeatedly transmitted.

## Patentansprüche

1. Endgerät (1), umfassend:
einen Steuerabschnitt (12), der so konfiguriert ist, dass er eine Priorität eines ersten Aufwärtsverbindungssignals und eine Priorität eines zweiten Aufwärtsverbindungssignals bestimmt; und
einen Übertragungsabschnitt (11), der so konfiguriert ist, dass er das erste Aufwärtsverbindungssignal und das zweite Aufwärtsverbindungssignal überträgt, wobei
wenn ein Übertragungszeitpunkt des zweiten Aufwärtsverbindungssignals sich mit einem Übertragungszeitpunkt des ersten Aufwärtsverbindungssignals überschneidet, das gegenüber dem zweiten Aufwärtsverbindungssignal depriorisiert ist und wiederholt übertragen wird, der Steuerabschnitt (12) so konfiguriert ist, dass er eine Nichtübertragung aller einer Vielzahl der ersten Aufwärtsverbindungssignale, die wiederholt zu übertragen sind, bestimmt,
wobei der Steuerabschnitt (12) so konfiguriert ist, dass er die Priorität des ersten Aufwärtsverbindungssignals, das durch eine konfigurierte Freigabe übertragen wird, und die Priorität des zweiten Aufwärtsverbindungssignals, das durch eine dynamische Freigabe übertragen wird, bestimmt.

2. Funksystem, umfassend:
ein Endgerät (1), umfassend:
einen Steuerabschnitt (12), der so konfiguriert ist, dass er eine Priorität eines ersten Aufwärtsverbindungssignals und eine Priorität eines zweiten Aufwärtsverbindungssignals bestimmt; und
einen Übertragungsabschnitt (11), der so konfiguriert ist, dass er das erste Aufwärtsverbindungssignal und das zweite Aufwärtsverbindungssignal überträgt, wobei,
wenn ein Übertragungszeitpunkt des zweiten Aufwärtsverbindungssignals sich mit einem Übertragungszeitpunkt des ersten Aufwärtsverbindungssignals überschneidet, das gegenüber dem zweiten Aufwärtsverbindungssignal depriorisiert ist und wiederholt übertragen wird, der Steuerabschnitt (12) so konfiguriert ist, dass er eine Nichtübertragung aller einer Vielzahl der ersten Aufwärtsverbindungssignale, die wiederholt zu übertragen sind, bestimmt,
wobei der Steuerabschnitt (12) so konfiguriert ist, dass er die Priorität des ersten Aufwärtsverbindungssignals, das durch eine konfigurierte Freigabe übertragen wird, und die Priorität des zweiten Aufwärtsverbindungssignals, das durch eine dynamische Freigabe übertragen wird, bestimmt; und
eine Basisstation (2), umfassend:
einen Empfangsabschnitt (21), der so konfiguriert ist, dass er das zweite Aufwärtsverbindungssignal empfängt, wenn sich der Übertragungszeitpunkt des zweiten Aufwärtsverbindungssignals mit dem Übertragungszeitpunkt des ersten Aufwärtsverbindungssignals überschneidet und die Nichtübertragung aller der Vielzahl der ersten Aufwärtsverbindungssignale, die wiederholt zu übertragen sind, durch das Endgerät (1) bestimmt wird.

3. Kommunikationsverfahren, umfassend:
Bestimmen einer Priorität eines ersten Aufwärtsverbindungssignals und einer Priorität eines zweiten Aufwärtsverbindungssignals durch ein Endgerät (1) und Bestimmen der Priorität des ersten Aufwärtsverbindungssignals, das durch eine konfigurierte Freigabe übertragen wird, und der Priorität des zweiten Aufwärtsverbindungssignals, das durch eine dynamische Freigabe übertragen wird, durch das Endgerät (1);
Übertragen des ersten Aufwärtsverbindungssignals und des zweiten Aufwärtsverbindungssignals durch das Endgerät (1); und
wenn sich ein Übertragungszeitpunkt des zweiten Aufwärtsverbindungssignals mit einem Übertragungszeitpunkt des ersten Aufwärtsverbindungssignals überschneidet, das gegenüber dem zweiten Aufwärtsverbindungssignal depriorisiert ist und wiederholt übertragen wird, Bestimmen einer Nichtübertragung aller einer Vielzahl der ersten Aufwärtsverbindungssignale, die wiederholt zu übertragen sind, durch das Endgerät (1).

## Revendications

1. Terminal (1), comprenant :
une section de commande (12) configurée pour déterminer une priorité d'un premier signal de liaison montante et une priorité d'un second signal de liaison montante ; et
une section de transmission (11) configurée pour transmettre le premier signal de liaison montante et le second signal de liaison montante, dans lequel
lorsqu'un temps de transmission du second signal de liaison montante chevauche un temps de transmission du premier signal de liaison montante qui est dépriorisé par rapport au second signal de liaison montante et est transmis de manière répétée, la section de commande (12) est configurée pour déterminer la non-transmission de la totalité d'une pluralité des premiers signaux de liaison montante à transmettre de manière répétée,
dans lequel la section de commande (12) est configurée pour déterminer la priorité du premier signal de liaison montante transmis par une autorisation configurée et la priorité du second signal de liaison montante par une autorisation dynamique.

2. Système radio, comprenant :
un terminal (1) comprenant :
une section de commande (12) configurée pour déterminer une priorité d'un premier signal de liaison montante et une priorité d'un second signal de liaison montante ; et
une section de transmission (11) configurée pour transmettre le premier signal de liaison montante et le second signal de liaison montante, dans lequel,
lorsqu'un temps de transmission du second signal de liaison montante chevauche un temps de transmission du premier signal de liaison montante qui est dépriorisé par rapport au second signal de liaison montante et est transmis de manière répétée, la section de commande (12) est configurée pour déterminer la non-transmission de la totalité d'une pluralité des premiers signaux de liaison montante à transmettre de manière répétée,
dans lequel la section de commande (12) est configurée pour déterminer la priorité du premier signal de liaison montante transmis par une autorisation configurée et la priorité du second signal de liaison montante transmis par une autorisation dynamique ; et
une station de base (2) comprenant :
une section de réception (21) configurée pour recevoir le second signal de liaison montante lorsque le temps de transmission du second signal de liaison montante chevauche le temps de transmission du premier signal de liaison montante et que la non-transmission de la totalité de la pluralité des premiers signaux de liaison montante à transmettre de manière répétée est déterminée par le terminal (1).

3. Procédé de communication, comprenant :
la détermination, par un terminal (1), d'une priorité d'un premier signal de liaison montante et d'une priorité d'un second signal de liaison montante, et la détermination, par le terminal (1), de la priorité du premier signal de liaison montante transmis par une autorisation configurée et de la priorité du second signal de liaison montante transmis par une autorisation dynamique ;
la transmission, par le terminal (1), du premier signal de liaison montante et du second signal de liaison montante ; et
lorsqu'un temps de transmission du second signal de liaison montante chevauche un temps de transmission du premier signal de liaison montante qui est dépriorisé par rapport au second signal de liaison montante et est transmis de manière répétée, la détermination, par le terminal (1), de la non-transmission de tous les premiers signaux de liaison montante à transmettre de manière répétée.
